(19) Europäisches Patentamt / European Patent Office / Office européen des brevets

(11) **EP 3 893 003 B1**

(12) **FASCICULE DE BREVET EUROPEEN**

(45) Date de publication et mention
de la délivrance du brevet:
**14.12.2022  Bulletin 2022/50**

(21) Numéro de dépôt: **21167415.5**

(22) Date de dépôt: **08.04.2021**

(51) Classification Internationale des Brevets (IPC):
**G01P 15/08** [(2006.01)]     **G01P 15/093** [(2006.01)]
**G01C 19/58** [(2006.01)]

(52) Classification Coopérative des Brevets (CPC):
**G01P 15/0802; G01C 19/58; G01P 15/093**

(54) **INTERFÉROMÈTRE ATOMIQUE À RÉSEAU DE DIFFRACTION BIDIMENSIONNEL ET PROCÉDÉ D'INTERFÉROMÉTRIE ATOMIQUE**

ATOMARES INTERFEROMETER MIT ZWEIDIMENSIONALEM BEUGUNGSGITTER UND VERFAHREN ZUR ATOMARINTERFEROMETRIE

ATOMIC INTERFEROMETER WITH TWO-DIMENSIONAL DIFFRACTION NETWORK AND ATOMIC INTERFEROMETRY METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2020  FR 2003648**

(43) Date de publication de la demande:
**13.10.2021  Bulletin 2021/41**

(73) Titulaire: **Ixblue**
**78100 Saint-Germain-en-Laye (FR)**

(72) Inventeurs:
 • **CHEINEY, Pierrick**
 **78100 SAINT-GERMAIN-EN-LAYE (FR)**
 • **GOURAUD, Baptiste**
 **78100 SAINT-GERMAIN-EN-LAYE (FR)**
 • **BARRET, David Brynle**
 **33400 TALENCE (FR)**
 • **BATTELIER, Baptiste**
 **33400 TALENCE (FR)**
 • **BOUYER, Philippe**
 **33400 TALENCE (FR)**

(74) Mandataire: **Jacobacci Coralis Harle**
 **32, rue de l'Arcade**
 **75008 Paris (FR)**

(56) Documents cités:
 **FR-A1- 2 928 725**

 • **LI XIAOJIE ET AL: "A Multi-Axis Atom Interferometer Gyroscope Based on a Grating Chip", 2020 IEEE INTERNATIONAL SYMPOSIUM ON INERTIAL SENSORS AND SYSTEMS (INERTIAL), IEEE, 23 mars 2020 (2020-03-23), pages 1-4, XP033770284, DOI: 10.1109/INERTIAL48129.2020.9090092**
 • **C. C NSHII ET AL: "A surface-patterned chip as a strong source of ultracold atoms for quantum technologies", NATURE NANOTECHNOLOGY, vol. 8, 1 janvier 2013 (2013-01-01), pages 321-324, XP055453116, DOI: 10.1038/nnano.2013.47**
 • **CANUEL B ET AL: "6-axis inertial sensor using cold-atom interferometry", ARXIV.ORG, CORNELL UNIVERSITY LIBRARY, 201 OLIN LIBRARY CORNELL UNIVERSITY ITHACA, NY 14853, 7 avril 2006 (2006-04-07), XP080235504, DOI: 10.1103/PHYSREVLETT.97.010402**
 • **XUE HONGBO ET AL: "A continuous cold atomic beam interferometer", JOURNAL OF APPLIED PHYSICS, AMERICAN INSTITUTE OF PHYSICS, US, vol. 117, no. 9, 7 mars 2015 (2015-03-07), XP012195092, ISSN: 0021-8979, DOI: 10.1063/1.4913711 [extrait le 1901-01-01]**
 • **BARRETT BRYNLE ET AL: "The Sagnac effect: 20 years of development in matter-wave interferometry", COMPTES RENDUS - PHYSIQUE, ELSEVIER, PARIS, FR, vol. 15, no. 10, 12 novembre 2014 (2014-11-12), pages 875-883, XP029096723, ISSN: 1631-0705, DOI: 10.1016/J.CRHY.2014.10.009**

**Description**

**Domaine technique**

La présente invention concerne le domaine technique des interféromètres atomiques, en particulier pour des mesures d'accélération et/ou de rotation.

Elle concerne plus particulièrement un senseur inertiel basé sur un interféromètre atomique de Mach-Zehnder pour des mesures d'accélération et/ou de rotation suivant une direction prédéterminée et configurable. Elle concerne aussi un senseur inertiel basé sur un interféromètre atomique pour des mesures séquentielles d'accélération et/ou de rotation suivant plusieurs axes.

**Technique antérieure**

La réalisation d'un interféromètre à atomes froids et à impulsions lumineuses est basée sur les interactions entre une ou plusieurs sources laser et des atomes dans un espace sous ultra vide. La source laser est en général configurée pour remplir successivement différentes fonctions détaillées ci-dessous.

Les étapes suivantes concernent plus spécifiquement la réalisation d'un interféromètre atomique de Mach-Zehnder à impulsions lumineuses dans lesquelles au moins trois paires de faisceaux laser, séparées dans le temps et/ou dans l'espace, réalisent les fonctions de lames séparatrices et de miroirs pour les atomes, par interaction avec la structure hyperfine des atomes. Chaque paire de faisceaux comprend deux faisceaux contrapropagatifs. Dans le cas d'un accéléromètre, les faisceaux contrapropagatifs sont généralement disposés parallèlement à la direction de propagation des atomes. Dans le cas d'un gyromètre, les faisceaux contrapropagatifs sont généralement disposés transversalement à la direction de propagation des atomes. La dernière étape consiste à détecter l'état d'interférence des ondes d'atomes en sortie de l'interféromètre, par exemple par fluorescence laser sur une raie d'absorption des atomes et à compter le nombre total d'atomes de façon à normaliser les mesures interférométriques.

Ces étapes forment une séquence de mesure par interférométrie atomique dont la durée totale est généralement inférieure à une seconde.

La majorité des interféromètres atomiques utilisent des transitions de Raman à deux photons pour séparer, réfléchir et recombiner des paquets d'onde atomique afin de former un interféromètre, par exemple un interféromètre de Mach-Zehnder, sensible à différents effets inertiels. Afin d'obtenir une sensibilité aux effets inertiels, il est nécessaire d'utiliser deux faisceaux laser avec deux fréquences optiques différentes se propageant dans des directions opposées. Dans le cas de la configuration de Mach-Zehnder, l'interféromètre est sensible à l'accélération des atomes suivant une direction de mesure définie par le vecteur d'onde optique résultant de la différence entre les vecteurs d'onde des deux faisceaux laser utilisés.

La configuration de faisceaux la plus classique consiste en un faisceau laser incident contenant deux fréquences différentes dont le désaccord en fréquence correspond à la structure hyperfine de l'atome, réfléchi sur un miroir plan. Dans ce cas, la transition Raman à deux photons implique le faisceau incident et le faisceau réfléchi par le miroir plan. L'interféromètre atomique de Mach-Zehnder est sensible à l'accélération des atomes suivant une direction orthogonale au plan du miroir.

Il est avantageux d'utiliser une source d'atomes froids afin d'augmenter la sensibilité de l'interféromètre atomique. L'obtention d'une source d'atomes froids nécessite une étape de piégeage et de refroidissement basée par exemple sur un piège magnéto-optique qui requiert l'utilisation de faisceaux laser selon au moins quatre directions de l'espace.

Dans ce cas, le procédé de mesure comporte les étapes suivantes qui sont préalables à l'interférométrie atomique en elle-même. Une première étape est une étape de piégeage des atomes, qui consiste à maintenir la position du nuage d'atomes et de refroidissement des atomes qui consiste à réduire l'étendue de la dispersion en vitesse des atomes par des mécanismes d'absorption de photons dans un piège magnéto-optique. Une deuxième étape de lancement consiste à interrompre le piégeage et à laisser les atomes tomber sous l'effet de la gravité ou à leur transmettre une vitesse initiale, par exemple par interaction avec un autre faisceau laser ou avec un gradient de champ magnétique.

Afin de simplifier et de rendre plus compact le système de piège permettant le refroidissement d'atomes, une première approche connue est basée sur l'utilisation d'un réflecteur de forme conique ou pyramidale. Un tel réflecteur permet de n'utiliser qu'un seul faisceau laser incident lors de l'étape de refroidissement laser. Le réflecteur de forme conique ou pyramidale réfléchit le faisceau incident suivant différentes directions. Dans le cas d'un réflecteur pyramidal à quatre facettes inclinées de 45 degrés par rapport à l'axe du faisceau incident, le faisceau laser incident est suffisamment étendu spatialement pour former deux paires de faisceaux réfléchis, chaque paire comprenant deux faisceaux contrapropagatifs, orientés orthogonalement par rapport au faisceau laser incident. Le faisceau incident est également réfléchi sur lui-même par réflexions successives sur deux faces de la pyramide. Un tel réflecteur pyramidal forme un piège par superposition du faisceau laser incident, des quatre faisceaux réfléchis perpendiculaires au faisceau incident et de faisceau(x) rétro-réfléchi(s) par double réflexion sur deux faces opposées de la pyramide. Le réflecteur pyramidal peut comporter en outre une cinquième face transverse au faisceau laser incident. Dans ce cas, le faisceau rétro-réfléchi contrapropagatif relativement au faisceau laser incident est issu d'une réflexion simple sur cette cinquième face. De façon avantageuse, dans un réflecteur pyramidal à quatre ou cinq facettes, un unique faisceau laser incident est réfléchi sur les différentes faces d'une pyramide creuse de manière à créer trois paires de faisceaux contra-propageants se propageant dans des directions orthogonales superposées dans une région de l'espace. Un tel réflecteur pyramidal forme ainsi un piège par superposition de trois paires de faisceaux orientés suivant trois axes orthogonaux. Le brevet FR 2928725 (P. Bouyer et A. Landragin) décrit l'utilisation d'un réflecteur conique ou pyramidal dans un capteur interférométrique à atomes froids, dans lequel le réflecteur conique ou pyramidal est utilisé pour produire une paire de faisceaux laser constituée du faisceau laser incident et d'un faisceau contrapropagatif obtenu par double réflexion sur le réflecteur conique ou pyramidal, cette paire de faisceaux laser étant adaptée pour former un interféromètre atomique sensible à une accélération suivant la direction du faisceaux incident. Dans cette configuration, les atomes sont initialement piégés et refroidis dans la zone de superposition des six faisceaux. Un temps de chute libre est ensuite introduit durant lequel les atomes tombent hors de la zone de superposition des six faisceaux. La séquence interférométrique est alors appliquée et implique le faisceau incident et le faisceau rétro-réfléchi obtenu par double réflexion.

Plus récemment, une autre approche de piège a été développée, qui est basée sur un réseau de diffraction bidimensionnel combiné à un seul faisceau laser incident. On entend ici par réseau de diffraction bidimensionnel, un réseau de diffraction ayant un motif périodique suivant au moins deux directions transverses. La publication C. C. Nshii et al. (« A surface-patterned chip as a strong source of ultracold atoms for quantum technologies », Nature Nanotechnology, Vol. 8, pages 321-324, 2013) divulgue un réseau de diffraction bidimensionnel constitué de trois réseaux linéaires qui permet de diffracter un faisceau incident en trois faisceaux diffractés qui se superposent spatialement au faisceau incident pour former un piège magnéto-optique (ou MOT) à quatre faisceaux, les trois faisceaux diffractés étant inclinés d'un angle θ par rapport au faisceau incident. La publication C. C. Nshii et al. divulgue aussi un autre réseau de diffraction bidimensionnel présentant le même motif et le même pas suivant deux directions orthogonales qui permet de diffracter un faisceau incident en quatre faisceaux diffractés qui se superposent au faisceau incident pour former un piège magnéto-optique à cinq faisceaux laser, les quatre faisceaux diffractés étant inclinés d'un angle θ par rapport au faisceau incident.

LI XIAOJIE ET AL: "A Multi-Axis Atom Interferometer Gyroscope Based on a Grating Chip", divulgue un interféromètre atomique comprenant - une source d'atomes apte à générer un nuage d'atomes, - une source laser configurée pour générer un faisceau laser source, - un dispositif de génération de champ magnétique, - un réseau de diffraction bidimensionnel disposé pour recevoir le faisceau laser incident et former par diffraction au moins trois faisceaux diffractés suivant au moins trois directions non coplanaires, les au moins trois faisceaux diffractés étant inclinés par rapport à l'axe du faisceau laser incident, - les faisceaux laser étant appliquée pour interagir avec le nuage d'atomes suivant une séquence temporelle par transitions multi-photons et former un interféromètre atomique de Mach-Zehnder sensible à une accélération du nuage d'atomes.

Jusqu'à présent ces réseaux de diffraction bidimensionnels ont été utilisés uniquement pour la phase de piégeage et de refroidissement atomique. Il est donc nécessaire d'utiliser d'autres paires de faisceaux laser, indépendamment du dispositif de piégeage à réseau de diffraction bidimensionnel, pour former un interféromètre atomique de Mach-Zehnder.

Le problème technique que se propose de résoudre la présente invention est de fournir un interféromètre atomique compact, l'interféromètre atomique étant sensible suivant une direction sélectionnable parmi un ensemble de directions ajustées de manière prédéterminée.

**Exposé de l'invention**

A cet effet, l'invention propose un interféromètre atomique comprenant une source d'atomes apte à générer un nuage d'atomes, un dispositif de génération de champ magnétique et une source laser configurée pour générer un faisceau laser source.

Selon l'invention, l'interféromètre atomique comporte des moyens de polarisation configurés pour recevoir le faisceau laser source et générer un faisceau laser incident polarisé suivant un état de polarisation ajustable, un système d'ajustement d'un désaccord entre deux fréquences optiques du faisceau laser incident, un réseau de diffraction bidimensionnel disposé pour recevoir le faisceau laser incident et former par diffraction au moins trois faisceaux diffractés suivant au moins trois directions non coplanaires, les au moins trois faisceaux diffractés étant inclinés par rapport à l'axe du faisceau laser incident, un contrôleur configuré pour sélectionner une première combinaison d'un premier désaccord en fréquence optique du faisceau laser incident relatif à une première vitesse du nuage d'atomes, d'un premier état de polarisation du faisceau laser incident et d'un premier champ magnétique orienté suivant une direction déterminée par rapport au réseau de diffraction à deux dimensions, la première combinaison étant adaptée pour sélectionner une première paire de faisceaux laser parmi les paires de faisceaux formées à partir du faisceau laser incident et des au moins trois faisceaux diffractés, une différence entre les deux vecteurs d'onde de la première paire de faisceaux laser déterminant une première direction de mesure, la première paire de faisceaux laser étant appliquée pour interagir avec le nuage d'atomes suivant une séquence temporelle par transitions multi-photons et former un premier interféromètre atomique de Mach-Zehnder sensible à une accélération du nuage d'atomes suivant la première direction de mesure.

Ainsi, l'ensemble de directions ajustées de manière prédéterminée est lié à la géométrie du réseau de diffraction bidimensionnel. Plus précisément, l'orientation et la configuration du réseau de diffraction bidimensionnel déterminent une base non orthogonale à trois dimensions qui permet d'obtenir des mesures d'interférométrie atomique suivant trois axes de cette base en 3D. Plus précisément, l'invention permet de choisir, pour chaque mesure, la direction sensible de l'interféromètre atomique parmi un ensemble fini de directions prédéterminées.

Selon un aspect particulier et avantageux, le contrôleur est configuré pour sélectionner une deuxième combinaison d'un deuxième désaccord en fréquence optique du faisceau laser incident relatif à une deuxième vitesse du nuage d'atomes, d'un deuxième état de polarisation du faisceau laser incident et d'un deuxième champ magnétique par rapport au réseau de diffraction à deux dimensions, la deuxième combinaison étant adaptée pour sélectionner une deuxième paire de faisceaux laser parmi les paires de faisceaux formées à partir du faisceau laser incident et des au moins trois faisceaux diffractés, une différence entre les deux vecteurs d'onde de la deuxième paire de faisceaux laser déterminant une deuxième direction de mesure différente de la première direction de mesure, la deuxième paire de faisceaux laser étant appliquée pour interagir avec le nuage d'atomes suivant une séquence temporelle de transitions multi-photons et former un deuxième interféromètre atomique de Mach-Zehnder sensible à une accélération du nuage d'atomes suivant la deuxième direction de mesure.

Dans un mode de réalisation, le réseau de diffraction bidimensionnel est un réseau de diffraction configuré pour générer par diffraction quatre faisceaux diffractés dans quatre directions non coplanaires.

Dans un autre mode de réalisation, le réseau de diffraction bidimensionnel est un réseau de diffraction configuré pour générer par diffraction trois faisceaux diffractés dans trois directions non coplanaires.

Avantageusement, le réseau de diffraction bidimensionnel est à conservation de polarisation.

Selon des aspects particuliers et avantageux, les moyens de polarisation comprennent un retardateur à cristaux liquides, une cellule de Pockels ou un contrôleur de polarisation par déformation d'une fibre optique monomode.

Selon d'autres aspects particuliers et avantageux, le dispositif de génération de champ magnétique comporte trois paires de bobines électriques en configuration de Helmholtz.

Selon un aspect particulier et avantageux, l'interféromètre atomique comprend des moyens de génération d'un gradient de champ magnétique adaptés pour ajuster la première vitesse et/ou la deuxième vitesse du nuage d'atomes.

Avantageusement, le système d'ajustement d'un désaccord entre deux fréquences optiques du faisceau laser incident est adapté pour ajuster le premier désaccord en fréquence optique en fonction de la première vitesse du nuage d'atomes et/ou, respectivement, pour ajuster le deuxième désaccord en fréquence optique en fonction de la deuxième vitesse du nuage d'atomes.

Dans un mode de réalisation, le système d'ajustement d'un désaccord entre deux fréquences optiques du faisceau laser incident comprend un modulateur électro-optique ou une source radiofréquence.

Selon un autre aspect particulier, l'interféromètre atomique comprend des moyens d'orientation du réseau de diffraction bidimensionnel.

L'invention concerne aussi un procédé d'interférométrie atomique comprenant les étapes suivantes : a) génération d'un nuage d'atomes ; b) sélection d'un premier état de polarisation d'un faisceau laser incident sur un réseau de diffraction bidimensionnel et d'un premier champ magnétique orienté suivant une direction déterminée par rapport au réseau de diffraction bidimensionnel ; c) lancement du nuage d'atomes avec une première vitesse et calcul d'un premier désaccord entre deux fréquences optiques du faisceau laser incident, le premier désaccord en fréquence optique étant relatif à la première vitesse, pour former une première combinaison du premier désaccord en fréquence optique du faisceau laser incident, du premier état de polarisation du faisceau laser incident et du premier champ magnétique, la première combinaison étant adaptée pour sélectionner une première paire de faisceaux parmi les paires de faisceaux formées à partir du faisceau laser incident et d'au moins trois faisceaux diffractés formés par diffraction du faisceau laser incident sur le réseau de diffraction bidimensionnel suivant au moins trois directions non coplanaires ; d) application au nuage d'atomes de la première combinaison du premier champ magnétique, du premier état de polarisation et du premier désaccord entre deux fréquences optiques du faisceau laser incident de manière à sélectionner la première paire de faisceaux laser, une différence entre vecteurs d'onde de la première paire de faisceaux laser déterminant une première direction de mesure, la première paire de faisceaux laser étant appliquée pour interagir avec le nuage d'atomes suivant une séquence temporelle de transitions multi-photons et former un premier interféromètre atomique de Mach-Zehnder sensible à une accélération du nuage d'atomes suivant la première direction de mesure ; et e) détection d'un signal représentatif d'une accélération du nuage d'atomes suivant la première direction de mesure.

Avantageusement, on répète l'étape a) et le procédé d'interférométrie atomique comprend en outre les étapes suivantes : f) sélection d'un deuxième champ magnétique et d'un deuxième état de polarisation du faisceau laser incident sur le réseau de diffraction bidimensionnel; g) lancement du nuage d'atomes avec une deuxième vitesse et calcul d'un deuxième désaccord entre deux fréquences optiques du faisceau laser incident, le deuxième désaccord en fréquence optique étant relatif à la deuxième vitesse, pour former une deuxième combinaison du deuxième désaccord en fréquence optique du faisceau laser incident, du deuxième état de polarisation du faisceau laser incident et du deuxième champ magnétique, la deuxième combinaison étant adaptée pour sélectionner une deuxième paire de faisceaux parmi les paires de faisceaux formées à partir du faisceau laser incident et des au moins trois faisceaux diffractés ; h) application au nuage d'atomes de la deuxième combinaison du deuxième champ magnétique, du deuxième état de polarisation et du deuxième désaccord entre deux fréquences optiques du faisceau laser incident de manière à sélectionner la deuxième paire de faisceaux laser, une différence entre vecteurs d'onde de la deuxième paire de faisceaux laser déterminant une deuxième direction de mesure, la deuxième paire de faisceaux laser étant appliquée pour interagir avec le nuage d'atomes suivant une séquence temporelle de transitions multi-photons et former un deuxième interféromètre atomique de Mach-Zehnder sensible à une accélération du nuage d'atomes suivant la deuxième direction de mesure ; i) détection d'un signal représentatif d'une accélération du nuage d'atomes suivant la deuxième direction de mesure.

Selon un aspect particulier, le procédé d'interférométrie atomique comprend une étape de piégeage et refroidissement du nuage d'atomes pour former un nuage d'atomes froids et de préparation d'un état quantique initial du nuage d'atomes froids.

De façon avantageuse, l'étape de piégeage et refroidissement comprend un piégeage magnéto-optique du nuage d'atomes par superposition du faisceau laser incident et des au moins trois faisceaux diffractés dans une zone de recouvrement et par application d'un champ magnétique quadripolaire adapté pour former le nuage d'atomes froids.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

**Brève description des dessins**

De plus, diverses autres caractéristiques de l'invention ressortent de la description annexée effectuée en référence aux dessins qui illustrent des formes, non limitatives, de réalisation de l'invention et où :

[Fig. 1] est une vue en coupe schématique d'un interféromètre atomique selon un mode de réalisation de l'invention ;
[Fig. 2] est une vue en perspective de la géométrie des faisceaux laser incident et diffractés sur un réseau de diffraction bidimensionnel particulier pour former un interféromètre atomique selon un mode de réalisation de l'invention;
[Fig. 3] est une vue dans un plan de diffraction transverse au réseau de diffraction bidimensionnel de la figure 2 qui illustre le recouvrement du faisceau incident et de deux des faisceaux diffractés;
[Fig. 4] est une vue de paires possibles de faisceaux dans le plan de diffraction de la figure 3, qui montre quelques unes des paires de faisceaux utilisables pour former un interféromètre atomique sensible à une accélération suivant différentes directions ;
[Fig. 5] est une vue d'un exemple d'une combinaison d'un champ magnétique avec un état de polarisation optique du faisceau laser incident et des faisceaux diffractés ;
[Fig. 6] représente la force de couplage pour différentes transitions Raman à deux photons en fonction du désaccord en fréquence entre deux raies de la source laser ;
[Fig. 7] est une représentation schématique d'une séquence expérimentale de mesure par interférométrie atomique selon un exemple de réalisation de l'invention.

Il est à noter que sur ces figures les éléments structurels et/ou fonctionnels communs aux différentes variantes peuvent présenter les mêmes références.

**Description détaillée**

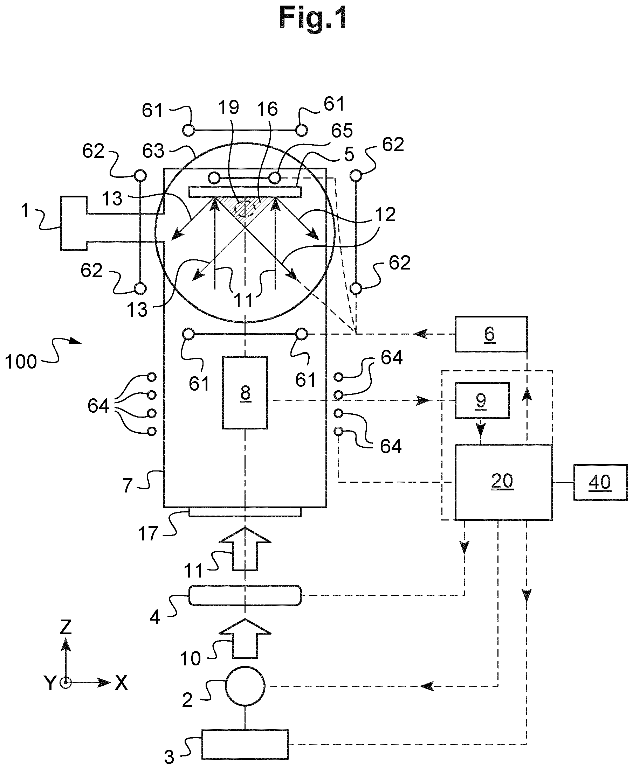

La figure 1 représente schématiquement un interféromètre atomique ajustable pour effectuer une mesure d'interférométrie atomique par rapport à un axe déterminé ou pour effectuer séquentiellement plusieurs mesures d'interférométrie atomique selon plusieurs axes ajustables. On a représenté un repère orthonormé XYZ, le plan de la figure 1 étant dans le plan XZ.

L'interféromètre atomique 100 comporte une enceinte à vide 7 munie d'une fenêtre 17, une source d'atomes 1, une source laser 2 apte à générer un faisceau laser source 10, un système d'ajustement 3 d'un désaccord en fréquence optique entre deux raies de la source laser, des moyens de polarisation 4 du faisceau laser source, un réseau de diffraction bidimensionnel 5, un dispositif de génération de champ magnétique comprenant par exemple trois paires de bobines électriques en configuration de Helmholtz 61, 62, 63 disposées pour générer un champ magnétique de direction ajustable, un système de détection 8, un calculateur 9, un contrôleur 20 et une interface utilisateur 40 (ou IHM).

La source d'atomes 1 comprend par exemple un réservoir contenant un matériau source sous forme solide et des moyens d'évaporation sous vide des atomes du matériau source. La source d'atomes 1 est une source d'atomes alcalins tels que des atomes de césium (Cs), lithium (Li), rubidium (Rb) et/ou potassium (K). La source d'atomes génère par exemple des atomes de rubidium 87, qui sont transférés dans l'enceinte à vide 7.

La source laser 2 comporte un laser double fréquence (aussi appelé bi-fréquence) ou deux lasers ayant des fréquences optiques légèrement différentes. La source laser 2 émet un faisceau source 10 ayant deux fréquences optiques séparées par un désaccord en fréquence (noté $\delta$) qui est ajustable via le système d'ajustement 3 pendant le procédé d'interférométrie atomique.

Dans un interféromètre atomique de Mach-Zehnder, le faisceau source 10 comprend une série d'impulsions lumineuses destinées à interagir avec les atomes par une série de transitions multi-photons.

Différents processus de transition mettant en oeuvre au moins deux photons sont actuellement utilisés dans les systèmes d'interféromètres à atomes froids. Certains processus de transition sont basés sur des transitions Raman ou de Bragg à deux photons ou sur des transitions de Raman ou Bragg multi-photons ou encore des oscillations de Bloch. A titre d'exemple, on considère ici une configuration basée sur des transitions Raman à deux photons.

Les interféromètres atomiques à impulsions lumineuses sensibles aux effets inertiels sont basés sur des transitions à deux photons sélectives en vitesse, ou, autrement dit en désaccord de fréquence optique, la transition étant résonnante pour une fréquence optique f reliée à la vitesse v des atomes par effet Doppler selon la formule : f=k.v. Un exemple courant de ce type de transition à deux photons correspond à une transition Raman, où deux faisceaux laser de fréquences optiques $\omega 1$ et $\omega 2$ sont ajustés au voisinage d'une transition optique dans l'atome considéré, tout étant suffisamment désaccordées pour que le niveau de population excitée soit faiblement peuplé. Le désaccord en fréquence optique $\delta = (\omega 1 - \omega 2)$ est choisi pour être résonnant avec une transition radio-fréquence entre deux niveaux fondamentaux hyperfins de l'atome considéré. Une transition multi-photons de Bragg ou à oscillations de Bloch peut aussi être utilisée pour construire un interféromètre atomique. Dans les derniers cas cités, au lieu de produire des transitions entre deux niveaux fondamentaux hyperfins, les atomes restent dans le même état fondamental et seule leur quantité de mouvement change. Dans la suite de la description, nous prenons comme exemple le cas de transitions multi-photons de type transitions Raman à deux photons pour des atomes de rubidium 87 ($^{87}$Rb). Toutefois, le principe s'applique également à d'autres transitions multi-photons, par exemple de Bragg ou de Bloch. Le même principe s'applique également à d'autres atomes, par exemple de lithium, sodium, potassium ou césium.

La source laser 2 est reliée à un système d'ajustement 3 d'un désaccord en fréquence optique entre deux raies de la source laser, qui permet d'ajuster successivement et très précisément la fréquence optique de la source laser 2 en fonction des différentes transitions d'énergie utilisées autour d'une longueur d'onde de transition caractéristique de l'espèce atomique considérée. Le système d'ajustement 3 du désaccord en fréquence optique ($\delta$) comprend par exemple une source radiofréquence (RF) apte à moduler la fréquence optique d'un laser ou le désaccord en fréquence optique entre deux lasers.

Un tel système de source laser peut être adapté pour générer une seule raie laser ou deux raies lasers simultanées, chacune de ces raies lasers commutant en fréquence optique plusieurs fois au cours d'une séquence d'interférométrie atomique dans une gamme spectrale généralement de quelques gigahertz (GHz) autour de la fréquence optique de transition. Chaque commutation s'applique pour une durée comprise entre quelques microsecondes et quelques centaines de millisecondes. Pour les différentes impulsions laser constituant l'interféromètre proprement dit (lames séparatrices et miroirs), les deux fréquences sont cohérentes en phase. Cette cohérence peut être obtenue par exemple en asservissant la phase de deux lasers indépendants ou en modulant un unique laser. Le système d'ajustement 3 permet d'accorder et commuter rapidement et très précisément la ou les fréquences optiques de la source laser 2. Plus précisément, la source laser est commutable et accordable en fréquence optique dans le domaine THz pour produire un désaccord de la fréquence optique du faisceau laser, ce désaccord ayant une amplitude maximum de quelques dizaines de GHz, ou, autrement dit, un ajustement très fin en longueur d'onde d'au plus une dizaine de picomètres par rapport à une longueur d'onde prédéterminée. Par exemple, la longueur d'onde cible est de 852.34 nm pour le césium, de 780.24 nm pour le rubidium et de 767 nm pour le potassium.

Le système d'ajustement 3 comprend par exemple un modulateur électro-optique qui module la fréquence de la source laser au moyen de signaux à des fréquences porteuses micro-onde pour générer une séquence de fréquences optiques prédéterminées. Dans ce cas, les deux fréquences optiques sont cohérentes en phase. Une autre implémentation possible consiste à utiliser deux lasers asservis en phase grâce à une boucle à verrouillage de phase.

Chaque commutation de fréquence optique correspond à un changement de valeur de longueur d'onde déterminé très précisément en fonction du spectre d'absorption de l'espèce atomique utilisée. D'autre part, la puissance lumineuse générée sur chaque raie doit être très précisément contrôlée. De plus, en interférométrie atomique, la phase relative entre les deux fréquences optiques doit être parfaitement contrôlée. Enfin, la largeur spectrale du laser source doit conserver sa très grande finesse pendant toute la durée du processus.

La source laser 2 génère un faisceau laser source 10 se propageant suivant l'axe Z du repère orthonormé.

Des moyens de polarisation 4 sont disposés entre la source laser 2 et la fenêtre 17 de l'enceinte à vide 7. Les moyens de polarisation 4 comprennent par exemple un retardateur à cristaux liquide, une cellule de Pockels ou un

EP 3 893 003 B1

contrôleur de polarisation par déformation d'une fibre optique monomode. Les moyens de polarisation 4 reçoivent le faisceau laser source 10 et forment un faisceau laser incident 11 qui est polarisé. Les moyens de polarisation 4 sont configurés pour ajuster la polarisation du faisceau laser incident 11 à la demande. Par exemple, Les moyens de polarisation 4 permettent d'ajuster l'état de polarisation du faisceau laser incident 11 au choix selon un état de polarisation linéaire dans le plan XY, ou encore selon un état de polarisation circulaire droite ou gauche.

Le faisceau laser incident 11 se propage suivant l'axe Z en direction de la fenêtre 17 de l'enceinte à vide 7.

Le réseau de diffraction bidimensionnel 5 est disposé dans l'enceinte à vide 7. La normale au réseau de diffraction bidimensionnel 5 est confondue avec la direction de l'axe Z. Dans cette configuration, le faisceau laser incident 11 est orthogonal au réseau de diffraction bidimensionnel 5. Le réseau de diffraction bidimensionnel 5 reçoit le faisceau laser incident 11 et forme par diffraction des faisceaux diffractés.

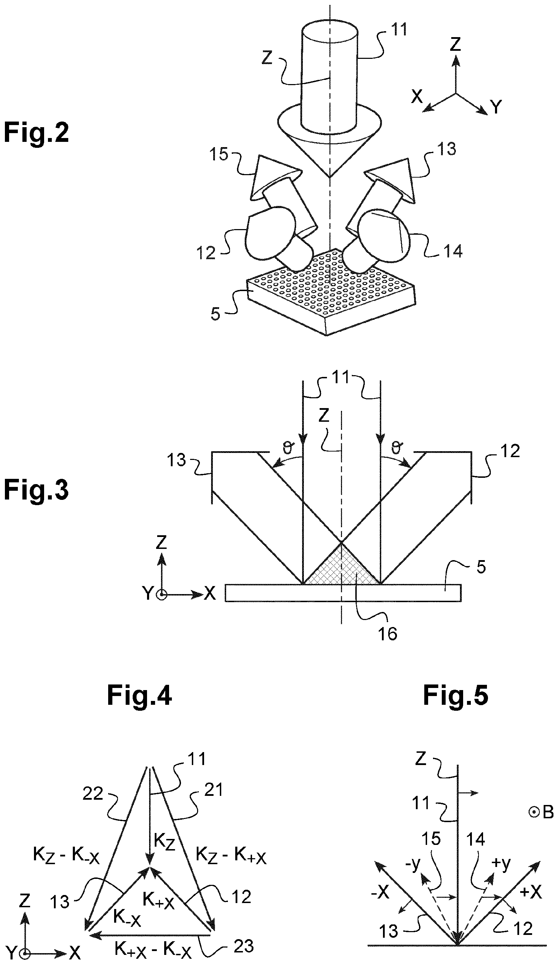

Dans l'exemple illustré sur les figures 2 à 5, le réseau de diffraction bidimensionnel 5 est un réseau de diffraction ayant un même motif périodique et une même période spatiale suivant deux directions orthogonales, ici orientées respectivement suivant les axes X et Y. Un tel réseau de diffraction bidimensionnel 5 permet de diffracter un faisceau incident en quatre faisceaux diffractés, par exemple dans les ordres +1 et -1 dans deux plans de diffraction transverses. Les faisceaux diffractés ne sont pas colinéaires pris deux à deux ou en combinaison avec le faisceau laser incident. Les quatre faisceaux diffractés ne sont pas coplanaires.

Plus précisément, la figure 2 représente une vue en perspective du faisceau laser incident 11 et des faisceaux diffractés 12, 13, 14, 15 et la figure 3 représente une vue en coupe dans le plan XZ du faisceau laser incident 11 et de deux faisceaux diffractés 12, 13. Le réseau de diffraction bidimensionnel 5 est ici avantageusement configuré pour qu'il n'y ait pas de diffraction dans l'ordre zéro (c'est-à-dire contrapropagativement au faisceau laser incident 11). La suppression de la diffraction dans l'ordre zéro est par exemple obtenue en ajustant le motif du réseau 5 et en particulier sa profondeur. Toutefois, la suppression de la diffraction dans l'ordre zéro n'est pas indispensable dans le cadre de la présente invention. Sur les figures 2 et 3, on observe que les quatre faisceaux diffractés 12, 13, 14, 15 sont situés dans deux plans de diffraction. Plus précisément, un premier faisceau diffracté 12 est diffracté dans l'ordre +1 dans le plan XZ, un deuxième faisceau diffracté 13 est diffracté dans l'ordre -1 dans le plan XZ, un troisième faisceau diffracté 14 est diffracté dans l'ordre +1 dans le plan YZ et un quatrième faisceau diffracté 15 est diffracté dans l'ordre -1 dans le plan YZ. Chacun des faisceaux diffractés forme un angle $\theta$ avec la direction du faisceau laser incident 11, autrement dit de l'axe Z. L'angle $\theta$ est compris entre 30 degrés et 60 degrés, par exemple d'environ 45 degrés. Les faisceaux diffractés 12, 13, 14, 15 ne sont donc pas orthogonaux au faisceau laser incident 11, contrairement aux faisceaux laser réfléchis utilisés conventionnement dans un système d'interférométrie atomique basé sur un réflecteur conique ou pyramidal ou sur un réflecteur plan.

D'autres géométries de réseau de diffraction bidimensionnel sont envisageables. En particulier, les plans de diffraction ne sont pas nécessairement orthogonaux entre eux mais peuvent présenter un angle différent de 90 degrés. Ceci peut être obtenu en utilisant un réseau de diffraction bidimensionnel ayant un motif périodique suivant deux directions présentant un angle différent de 90 degrés.

D'autre part, les angles de diffraction peuvent être différents dans des plans de diffraction différents. Ceci peut être obtenu en utilisant un réseau de diffraction bidimensionnel ayant au moins deux pas de réseau différents suivant deux directions distinctes.

Plus généralement, il est aussi possible d'utiliser un réseau de diffraction ayant une géométrie et une symétrie adaptées pour former trois faisceaux diffractés dans trois plans de diffraction distincts, les trois faisceaux diffractés n'étant pas coplanaires.

De façon particulièrement avantageuse, le réseau de diffraction bidimensionnel 5 est un réseau de diffraction à conservation de polarisation. Autrement dit, les faisceaux diffractés 12, 13, 14, 15 ont le même état de polarisation que le faisceau laser incident 11.

Le faisceau laser incident 11 et les quatre faisceaux diffractés 12, 13, 14, 15 se superposent dans une zone de recouvrement 16, aussi appelée zone de piégeage. La zone de recouvrement 16 est ici de forme pyramidale dont la base carrée est sur le réseau de diffraction bidimensionnel 5. Dans l'étape de piégeage et de refroidissement, la superposition du faisceau laser incident 11 et des quatre faisceaux diffractés 12, 13, 14, 15 permet de confiner le nuage d'atomes issu de la source d'atomes à proximité de la surface du réseau de diffraction bidimensionnel 5. Pour l'étape de piégeage et de refroidissement, il est nécessaire d'appliquer un champ magnétique quadripolaire dont la position du zéro de champ magnétique est ajustée de manière à être située dans la zone de recouvrement 16. A titre d'exemple non limitatif, une bobine électromagnétique 65 est disposée à l'arrière du réseau de diffraction bidimensionnel 5 (Fig. 1). Cette bobine 65 permet de générer un gradient de champ magnétique au voisinage de la zone de recouvrement 16 pour le piégeage et le refroidissement du nuage d'atomes. En variante, le support du réseau de diffraction bidimensionnel 5 intègre des moyens de génération de champ magnétique adaptés pour le piégeage et le refroidissement du nuage d'atomes.

De façon avantageuse, le dispositif de génération de champ magnétique génère un champ magnétique B dans la zone de recouvrement 16 des faisceaux laser. A titre d'exemple, le dispositif de génération de champ magnétique comprend un générateur électrique 6 qui alimente sélectivement une ou plusieurs paires de bobines électriques en configuration de Helmholtz 61, 62, 63 de manière à générer un champ magnétique de direction ajustable. A titre d'exemple non limitatif, le dispositif de génération de champ magnétique comprend une autre bobine électrique 64 et/ou 65 coaxiale à l'axe Z, qui permet de générer un gradient de champ magnétique, par exemple pour contrôler la vitesse des atomes en chute libre suivant l'axe Z.

Différentes configurations de champ magnétiques sont nécessaires pour les différentes étapes. Ces différentes configurations peuvent être obtenues en utilisant des bobines séparées ou non. Pour l'étape de refroidissement et de piégeage, il est nécessaire d'utiliser un champ quadripolaire (par exemple en utilisant la paire de bobines 61 en configuration anti-Helmholtz) dont le zéro de champ est situé dans la zone de recouvrement des atomes. La combinaison de ce champ magnétique quadripolaire et des cinq faisceaux laser superposés dans la zone de recouvrement 16 forme un piège magnéto-optique. Ce piège magnéto-optique permet de piéger et de refroidir le nuage d'atomes, pour maintenir la position du nuage d'atomes froids 19 dans la zone de recouvrement 16, le nuage d'atomes froids 19 étant à une température inférieure à quelques Kelvin, par exemple de l'ordre de 3 $\mu$K.

La polarisation optique du faisceau incident pendant le piégeage est circulaire. La vitesse des atomes est nulle en moyenne (ils sont piégés) et la dispersion en vitesse correspond à la température. La source contient deux fréquences laser décalées de quelques MHz à quelques dizaines de MHz par rapport à la transition atomique (par comparaison aux quelques 100 MHz à quelques GHz pour l'étape d'interférométrie).

Pour une éventuelle étape d'accélération magnétique, il est nécessaire d'utiliser un gradient de champ magnétique orienté suivant la direction de l'accélération désirée. Le gradient nécessaire étant important, la ou les bobines 64 et/ou 65 générant ce gradient sont situées avantageusement au plus près des atomes (et donc du réseau 5).

Pour l'étape d'interférométrie, il est nécessaire de produire un champ magnétique homogène dont la direction doit être ajustable (par exemple en utilisant les 3 paires de bobines 61, 62, 63 en configuration de Helmholtz).

Dans un interféromètre atomique conventionnel, il est possible de sélectionner indépendamment une paire de faisceaux laser contrapropagatifs pour effectuer une mesure interférométrique suivant un axe déterminé. Au contraire, l'utilisation d'un réseau de diffraction bidimensionnel 5 génère ici simultanément quatre faisceaux laser diffractés suivant quatre directions différentes. Il n'est pas possible de générer une seule paire de faisceaux laser à partir du réseau de diffraction bidimensionnel 5. La configuration d'un réseau de diffraction bidimensionnel 5 convient au piégeage des atomes mais semble a priori inadaptée pour effectuer des mesures d'interférométrie atomique suivant un axe déterminé.

La présente divulgation propose de mettre à profit le fait que les fréquences de résonance des transitions Raman dépendent de la vitesse des atomes, et que leur efficacité dépend de la polarisation des faisceaux laser, de la direction du champ magnétique appliqué et de l'état de spin des atomes. Plus précisément, la présente divulgation propose de sélectionner une paire de faisceaux et donc la direction sensible de l'interféromètre atomique en utilisant ces trois paramètres de contrôle.

Comme détaillé ci-dessous, pour obtenir une mesure d'interférométrie atomique relativement à une orientation déterminée dans le repère orthonormé, on sélectionne un interféromètre atomique de direction déterminée, en contrôlant une combinaison des trois paramètres suivants : la direction du champ magnétique, la polarisation optique du faisceau laser incident et la vitesse des atomes. Plus précisément, le piégeage et la détection sont indépendants de la direction de mesure de l'interféromètre atomique. Le lancement des atomes peut être ajusté pour choisir une direction particulière.

Le dispositif de génération de champ magnétique permet de sélectionner la direction du champ magnétique appliqué, par exemple en utilisant une combinaison des trois paires de bobines électriques 61, 62, 63 en configuration de Helmholtz.

Pour choisir l'état de spin des atomes, nous considérons ici le cas d'une transition entre les deux états fondamentaux non-magnétique, par exemple pour le rubidium 87. Ce cas est le plus utilisé car il permet d'être insensible au premier ordre aux fluctuations de champ magnétique.

Les moyens de polarisation 4, comprenant par exemple un retardateur à cristaux liquides, permettent de polariser le faisceau laser incident 11 suivant un état de polarisation déterminé.

Différentes techniques permettent de contrôler la vitesse des atomes en direction et amplitude. Par exemple, on peut utiliser l'effet de la gravité pour laisser les atomes tomber. En fonction de l'orientation du réseau de diffraction par rapport à la gravité, les atomes peuvent tomber par gravité suivant n'importe quel axe dans le repère lié au réseau de diffraction. A cet effet, l'interféromètre atomique 100 comprend avantageusement des moyens d'orientation adaptés pour permettre d'orienter l'ensemble formé par le réseau de diffraction bidimensionnel, la source laser et les moyens de génération de champ magnétique. Plus précisément, ces moyens d'orientation permettent d'orienter les axes du réseau de diffraction bidimensionnel par rapport à l'axe vertical lié à la gravité.

Une autre technique de contrôle de la vitesse des atomes repose sur l'utilisation d'un réseau optique formé par une technique dite de mélasse mouvante ou encore d'un gradient de champ magnétique pour accélérer les atomes. Enfin, une autre technique de contrôle de la vitesse des atomes consiste à faire varier rapidement les fréquences optiques de la source laser durant l'impulsion Raman pour simuler une vitesse artificielle. Dans ce cas, la variation de fréquence combinée avec le temps de propagation de la lumière entre les atomes et le réseau de diffraction lève la dégénérescence entre les transitions Raman sélective en vitesse correspondant d'une part à l'absorption d'un photon incident de fréquence $f_1$ et l'émission d'un photon diffracté par le réseau et de fréquence $f_2$ et d'autre part à l'absorption d'un photon incident de fréquence $f_2$ et l'émission d'un photon diffracté par le réseau et de fréquence $f_1$ (voir Phys. Rev. A 100, 053618).

Dans la suite du présent document, on considère un réseau de diffraction bidimensionnel configuré pour diffracter un faisceau laser incident orthogonal au réseau dans les ordres +1 et -1 avec un angle $\theta$ selon quatre directions de l'espace, comme illustré sur les figures 2 et 3. Sur la figure 3, dans le plan XZ, on observe le premier faisceau diffracté 12 dans l'ordre +1 et le deuxième faisceau diffracté 13 dans l'ordre -1. Les faisceaux diffractés 12, 13 forment un angle $\theta$ avec l'axe Z du faisceau laser incident 11. De manière analogue à la figure 3, dans le plan YZ, on observe le troisième faisceau diffracté 14 dans l'ordre +1 et le quatrième faisceau diffracté 15 dans l'ordre -1. Les faisceaux diffractés 14, 15 forment aussi un angle $\theta$ avec l'axe Z du faisceau laser incident 11. L'angle $\theta$ est compris entre 30 et 60 degrés, par exemple de l'ordre de 45 degrés. L'axe Z est ici vertical.

On note respectivement $\boldsymbol{kz}$ le vecteur d'onde du faisceau laser incident 11, $\boldsymbol{k_{+X}}$ le vecteur d'onde du premier faisceau diffracté 12, $\boldsymbol{k_{-X}}$ le vecteur d'onde du deuxième faisceau diffracté 13, $\boldsymbol{k_{+Y}}$ le vecteur d'onde du troisième faisceau diffracté 14 et $\boldsymbol{k_{-Y}}$ le vecteur d'onde du quatrième faisceau diffracté 15. Les vecteurs d'ondes des cinq faisceaux différents sont les suivants dans le repère orthonormé XYZ :

*[Math. 1]*

$$\mathbf{k_z} = k(0,0,-1)$$

$$\boldsymbol{k_{+x}} = k(\sin\theta, 0, \cos\theta)$$

$$\boldsymbol{k_{-x}} = k(-\sin\theta, 0, \cos\theta)$$

$$\boldsymbol{k_{+y}} = k(0, \sin\theta, \cos\theta)$$

$$\boldsymbol{k_{-y}} = k(0, -\sin\theta, \cos\theta)$$

A partir de ces cinq faisceaux laser, il existe 20 combinaisons de deux faisceaux laser ou 20 paires de faisceaux possibles, correspondant à 10 directions distinctes et 2 sens distincts par direction, par différence entre les vecteurs d'onde de deux faisceaux. Ces 10 directions distinctes sont réparties en trois dimensions. Dans le cas où la symétrie du réseau est d'ordre 4 (l'angle de diffraction est le même dans les plans XZ et YZ) deux directions sont identiques dans le plan XY. On note $\Delta k_i$ les différentes combinaisons de deux faisceaux ou plus précisément de deux vecteurs d'onde du type $\mathbf{k_A - k_B}$. Un interféromètre de Mach-Zehnder utilisant une paire de faisceaux (A, B) a une sensibilité en phase du type $\phi = \Delta k_i \, a \, T^2$, où a représente le vecteur accélération des atomes le long de la direction définie par le vecteur d'onde $\mathbf{k_A - k_B}$.

La figure 4 illustre des exemples de paires de faisceaux dans le plan XZ à partir des trois faisceaux suivants : le faisceau laser incident 11, le premier faisceau diffracté 12 et le deuxième faisceau diffracté 13. On observe ici trois paires de faisceaux dans le plan XZ permettant de former trois interféromètres sensibles à l'accélération selon trois directions différentes : kz - k+x , kz - k-x et k+x - k-x. De manière classique, pour chaque interféromètre, on utilise les transitions symétriques basées sur les 2 paires opposées : $\mathbf{k_A - k_B}$ et $\mathbf{k_B - k_A}$ afin de rejeter différents biais de mesure présents dans les interféromètres atomiques. Des combinaisons similaires entre le faisceau laser incident 11, le troisième faisceau diffracté 14 et le quatrième faisceau diffracté 15 existent dans le plan YZ. D'autres combinaisons de deux faisceaux impliquent un faisceau diffracté selon l'axe X et un autre faisceau diffracté selon l'axe Y.

Les fréquences laser sont les même pour tous les faisceaux. Une transition Raman est résonnante pour un désaccord entre les deux fréquences comprises dans le faisceau laser égal à $\delta = \delta_{HF} + \Delta k_i \, . \, \boldsymbol{v}$, où $\boldsymbol{v}$ représente la vitesse des atomes au moment de l'impulsion laser et $\delta_{HF}$ le désaccord en fréquence optique (qui correspond à la différence d'énergie) entre les deux états fondamentaux de l'atome (égale à 6.8 GHz dans le cas de l'atome de rubidium 87), $\boldsymbol{v}$ et $\Delta k_i$ étant ici des vecteurs. Cette vitesse des atomes peut être estimée grâce à la connaissance du champ de gravité et du temps entre l'impulsion Raman et le début de la chute des atomes. Le désaccord en fréquence optique $\delta_{HF}$ est une constante propre à chaque atome. Il est donc possible d'utiliser la vitesse initiale des atomes pour sélectionner une transition Raman spécifique. Plus précisément, on contrôle le désaccord en fréquence optique $\delta$ de la source laser de manière à s'ajuster à la vitesse des atomes. Ce contrôle est généralement aisé et rapide. La vitesse des atomes est contrôlable indépendamment dans une certaine mesure en contrôlant l'inclinaison du réseau de diffraction bidimensionnel par rapport au champ de gravité, ou en utilisant les techniques de mélasse mouvante ou de gradients de champ magnétique.

Nous considérons maintenant l'atome de rubidium 87 dans une configuration particulière de polarisation optique et de champ magnétique illustrée sur la figure 5. Le faisceau laser incident 11 est polarisé linéairement selon l'axe X. Le réseau de diffraction bidimensionnel est conçu pour conserver l'état de polarisation de la lumière. Par conséquent, les faisceaux diffractés 12, 13, 14, 15 sont aussi polarisés linéairement dans le plan XZ. La figure 5 présente les polarisations résultantes selon les différents faisceaux diffractés dans le plan XZ. Les faisceaux diffractés 14, 15 sont représentés en perspective (ils sont dans le plan YZ), cependant la polarisation de ces faisceaux diffractés 14, 15 est bien orientée selon l'axe X. Le générateur électrique 6 alimente sélectivement la paire de bobines électriques 63 de manière à générer un champ magnétique B orienté selon l'axe Y. Autrement dit, le champ magnétique B est ici orienté orthogonalement à la polarisation du faisceau laser incident 11. Dans cet exemple, les états de polarisations des différents faisceaux peuvent être représentés dans une base $(\sigma_-, \pi, \sigma_+)$ par rapport à l'axe de quantification défini par la direction du champ magnétique, où $\pi$ représente un état de polarisation (ou un champ électrique E) aligné suivant l'axe du champ magnétique B, $\sigma_-$ un état de polarisation circulaire gauche et $\sigma_+$ un état de polarisation circulaire droit :

*[Math. 2]*

$$\varepsilon_z = (1,0,1)/\sqrt{2}$$

$$\varepsilon_{+x} = (1,0,e^{2i\theta})/\sqrt{2}$$

$$\varepsilon_{-x} = (1,0,e^{-2i\theta})/\sqrt{2}$$

$$\varepsilon_{+y} = (1,0,1)/\sqrt{2}$$

$$\varepsilon_{-y} = (1,0,1)/\sqrt{2}$$

Or, seules certaines transitions sont permises par la physique atomique. En particulier, les transitions à deux photons impliquant des faisceaux de polarisation linéaire identiques et un choix précis de l'état de spin des atomes sont inhibées par des effets d'interférence quantique. Il s'ensuit que cette configuration permet d'éliminer les transitions du type (Y, Z) et (Y, Y), c'est-à-dire les transitions dans le plan YZ entre les vecteurs d'onde $k_Z$, $k_{+Y}$ et $k_{-Y}$. Par conséquent, la sélection d'une combinaison d'un champ magnétique B orienté suivant l'axe Y et d'un état de polarisation linéaire selon l'axe X permet de sélectionner uniquement les transitions de type (X,Z) et (X,X) dans le plan XZ entre les vecteurs d'onde $k_Z$, $k_{+X}$ et $k_{-X}$ ainsi que les transitions du type (XY) dans le plan XY entre les vecteurs d'onde $k_{+X}$ (ou $k_{-X}$) et $k_{+Y}$ (ou $k_{-Y}$).

Parmi les paires de faisceaux sélectionnées par combinaison de l'état de polarisation et du champ magnétique, on souhaite sélectionner une seule paire de faisceaux pour déterminer un axe de mesure interférométrique.

Une méthode pour sélectionner une unique paire de faisceaux, repose sur le calcul de la force du couplage pour chaque paire de faisceaux (parmi les 20 paires possibles) et chaque vitesse atomique entre l'état quantique initial noté $|1, v_0\rangle$ et les états excités par les différentes transitions Raman notés $|2, v_0 + h\Delta k_i/m\rangle$ où $h$ représente la constante de Planck divisée par 2pi et m la masse de l'atome considéré. Ce calcul fait intervenir les couplages entre les deux niveaux fondamentaux et l'ensemble des états excités de l'atome et le désaccord à la résonance Raman qui fait intervenir la vitesse des atomes. L'interaction des atomes avec la lumière des différents faisceaux peut être décrite dans le sous-ensemble des niveaux initiaux et excités par une transition Raman par un hamiltonien de taille 21x21 (selon l'approximation dite de l'onde tournante, pour les 20 combinaisons en plus de l'état initial) comme indiqué ci-dessous.

[Math. 3]

$$H = \begin{pmatrix} 0 & h\Omega_1/2 & \cdots & h\Omega_N/2 \\ h\Omega_1/2 & h\delta_1 & 0 & 0 \\ \vdots & 0 & \ddots & \vdots \\ h\Omega_N/2 & 0 & \cdots & h\delta_N \end{pmatrix}$$

Où $\Omega_i$ représente la fréquence de Rabi à résonance de la transition i et $\delta_i$ le désaccord à deux photons, qui dépend de la vitesse des atomes. L'état quantique après une durée d'interaction t avec la lumière s'exprime alors simplement : | $\phi$(t)> = exp(-iHt/h) |1, $\Delta \mathbf{v_0}$>.

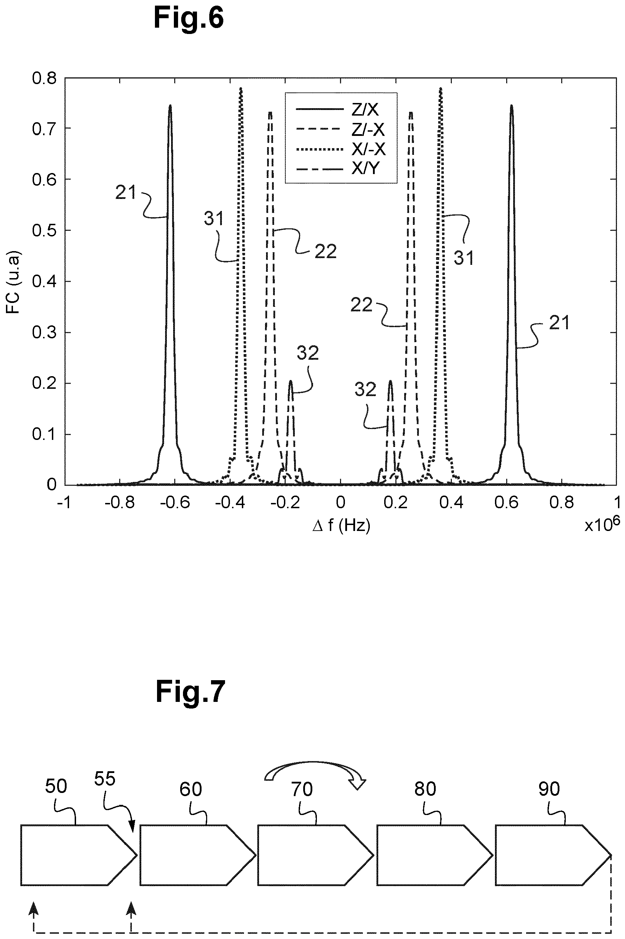

La figure 6 présente les forces de couplage (FC) des transitions permises entre les différents états après un temps d'interaction $t_\pi = \pi/\Omega_{XZ}$ en fonction du désaccord entre les deux fréquences du laser pour les transitions autorisées sur la base du champ magnétique appliqué et de la polarisation des faisceaux (les autres transitions ayant une probabilité d'excitation nulle). L'intensité du faisceau laser incident est ici de 60 W/m$^2$ et la température des atomes est suffisamment faible pour ne pas produire d'élargissement Doppler. A titre d'exemple, la vitesse initiale est dirigée en diagonale des directions X et Z : $v_0$= (0.2, 0, 0.2) m/s dans le repère XYZ. Ce choix correspond au cas d'un lancement initial par chute libre des atomes avec le réseau de diffraction incliné à 45 degrés par rapport à la gravité. On observe sur la figure 6 que les différentes transitions Raman sont séparées en fréquence par effet Doppler. La combinaison de faisceaux $\mathbf{k}_Z$ - $\mathbf{k}_{+X}$ correspond à un désaccord en fréquence d'environ $\pm$0,625 MHz au niveau des pics 21, la combinaison de faisceaux $\mathbf{k}_Z$- $\mathbf{k}_{-X}$ correspond à un désaccord en fréquence d'environ $\pm$0,25 MHz au niveau des pics 22, la combinaison de faisceaux $\mathbf{k}_{+X}$- $\mathbf{k}_{-X}$ correspond à un désaccord en fréquence d'environ $\pm$0,36 MHz au niveau des pics 31, la combinaison de faisceaux $\mathbf{k}_{+X}$ - $\mathbf{k}_{+Y}$ correspond à un désaccord en fréquence d'environ $\pm$0,18 MHz au niveau des pics 32. En particulier, il est possible d'isoler les transitions du type (+X, Z), (+X,-X) et (-X, Z) en sélectionnant le désaccord en fréquence de la source en combinaison avec l'orientation et l'amplitude la vitesse initiale. Cette configuration permet de séparer les interféromètres atomiques sensibles aux axes définis par les transitions XZ,-XZ et XX. En effet, les transitions (Y, Z) et (Y, Y) sont éliminés par le choix de la polarisation et du champ B. On observe que les transitions 32 et 22 sont proches. Si toutefois un couplage est observé entre les transitions 32 et 22, il est possible d'augmenter la vitesse initiale de manière à les séparer davantage. On sélectionne une transition ayant une intensité élevée pour activer une résonance spécifique des atomes. Les autres transitions ont une fréquence hors résonance ou une intensité relativement faible qui les rend inefficaces pour activer une transition Raman à deux photons. Deux transitions parmi les transitions XZ,-XZ et XX forment une base non orthogonale à deux dimensions.

De manière similaire, les interféromètres atomiques ayant une sensibilité selon l'axe Y peuvent être obtenus en changeant simultanément la combinaison de la polarisation du faisceau incident selon l'axe Y, la direction du champ magnétique selon l'axe X et du désaccord en fréquence de la source laser. On obtient ainsi une base non orthogonale à trois dimensions qui permet d'obtenir des mesures d'interférométrie atomique suivant trois axes de cette base en 3D. Cette base en 3D est déterminée par l'orientation et la configuration du réseau de diffraction bidimensionnel.

Par la sélection séquentielle de différentes combinaisons de champ magnétique, de polarisation des faisceaux et de désaccord en fréquence entre les deux raies de la source laser, il est ainsi possible de réaliser séquentiellement plusieurs interféromètres atomiques de type Mach-Zehnder sensibles aux accélérations selon au moins trois axes distincts permettant la reconstruction des trois composantes du vecteur accélération dans le repère orthonormé XYZ.

En variante, il est possible d'ajuster la vitesse des atomes à la place du désaccord en fréquence entre les deux raies de la source laser ou de manière complémentaire d'ajuster la vitesse des atomes et le désaccord en fréquence entre les deux raies de la source laser. En pratique toutefois, il est plus simple d'ajuster uniquement le désaccord en fréquence entre les deux raies de la source laser, la vitesse des atomes étant déterminée.

Le système de détection 8 détecte, par exemple par fluorescence, un signal représentatif de l'état quantique des atomes après recombinaison des deux nuages d'atomes en sortie d'un interféromètre atomique de Mach-Zehnder. Le calculateur 9 comporte un système de traitement du signal qui calcule l'accélération des atomes suivant l'axe choisi à partir du signal provenant du système de détection 8. Selon différentes variantes, le système de détection 8 peut être disposé à l'intérieur ou à l'extérieur de l'enceinte à vide 7.

Le contrôleur 20 commute ensuite l'orientation du champ magnétique, l'état de polarisation du faisceau laser incident et le désaccord entre les deux fréquences de la source laser pour effectuer une deuxième mesure d'interférométrie atomique suivant un deuxième axe de mesure prédéterminé. Ensuite, le contrôleur 20 commute de nouveau l'orientation du champ magnétique, l'état de polarisation du faisceau laser incident et le désaccord entre les deux fréquences de la source laser pour effectuer une troisième mesure d'interférométrie atomique suivant un troisième axe de mesure prédéterminé. On obtient ainsi séquentiellement, en moins de 100 ms par axe de mesure, les trois composantes du vecteur accélération des atomes à partir d'une seule source d'atomes et d'une seule source laser.

L'interface utilisateur 40 permet par exemple d'enregistrer la(les) direction(s) de mesure d'interférométrie atomique sélectionnée(s) et l'ordre dans lequel sont effectuées des mesures séquentielles suivant différents axes de mesure.

Nous avons décrit un mode de réalisation basé sur l'utilisation d'un réseau de diffraction bidimensionnel qui diffracte un faisceau incident pour former quatre faisceaux diffractés dans deux plans transverses. Ce mode de réalisation génère 20 paires de faisceaux qui permettent d'effectuer des mesures par interférométrie atomique de Mach-Zehnder séquentielles suivant trois axes d'une base, à partir d'une seule source laser et d'une seule source d'atomes.

En variante, on utilise un réseau de diffraction bidimensionnel constitué par exemple de trois réseaux linéaires qui permet de diffracter un faisceau incident en trois faisceaux diffractés respectivement par exemple dans l'ordre +1 de chaque réseau linéaire, les trois faisceaux diffractés étant inclinés d'un angle θ par rapport au faisceau incident. Ce mode de réalisation génère 12 paires de faisceaux à partir du faisceau incident et des trois faisceaux diffractés. De manière analogue au mode de réalisation avec quatre faisceaux diffractés, on utilise une combinaison de champ magnétique, de polarisation optique des faisceaux, de désaccord en fréquence relatif à la vitesse des atomes pour sélectionner une paire de faisceau, c'est-à-dire une différence de vecteur d'onde déterminant un axe de mesure adapté pour produire une interaction efficace par transition multi-photons avec les atomes. Cette combinaison est aisément commutable pour appliquer la sélection sur une autre paire de faisceaux, c'est-à-dire un autre vecteur d'onde, autrement dit un autre axe de mesure, pour permettre d'effectuer des mesures par interférométrie atomique de Mach-Zehnder séquentielles suivant trois axes d'une base, à partir d'une seule source laser et d'une seule source d'atomes.

La figure 7 représente schématiquement une séquence expérimentale de mesure par interférométrie atomique selon un exemple de réalisation de l'invention.

L'étape 50 est une étape de piégeage et refroidissement des atomes et de préparation de l'état quantique initial des atomes. Au cours de cette étape 50, la source d'atomes 1 génère un nuage d'atomes qui est transféré dans l'enceinte à vide 7. La source laser 2 génère un faisceau laser incident 11 suivant l'axe Z en direction du réseau de diffraction bidimensionnel 5 qui génère quatre faisceaux diffractés 12, 13, 14, 15 superposés spatialement avec le faisceau laser incident 11. Pour piéger et refroidir les atomes par piégeage magnéto-optique on applique un champ magnétique quadripolaire dont le zéro de champ est situé dans la zone de recouvrement des faisceaux. Pendant cette étape 50, les moyens de polarisation 4 sont configurés pour que l'état de polarisation du faisceau laser incident 11 soit circulaire. De plus, le système d'ajustement 3 du désaccord en fréquence optique entre deux raies de la source laser est configuré pour générer deux fréquences désaccordées de quelques MHz à quelques dizaines de MHz par rapport aux transitions atomiques transférant les atomes de chacun des deux états fondamentaux vers l'état excité. Cette combinaison des paramètres relatifs à l'état de polarisation du faisceau laser incident, du champ magnétique et du désaccord en fréquence de la source double fréquence permet de piéger les atomes pour former un nuage d'atomes froids 19 dans la zone recouvrement 16 au voisinage du réseau de diffraction bidimensionnel 5 et/ou de préparer leur état quantique initial. Les atomes froids 19 sont dans l'état quantique initial |1, vo> où $v_0$ représente le vecteur de vitesse initiale des atomes. La durée de l'étape 50 de piégeage et refroidissement des atomes et de préparation de l'état quantique initial est comprise entre 10 ms et 1s.

A l'étape 55, on sélectionne une direction de mesure par interférométrie atomique, parmi les 20 paires de faisceaux possible, par exemple la direction correspondant au vecteur d'onde $\boldsymbol{k}_{Z}$- $\boldsymbol{k}_{-X}$.

A cet effet, à l'étape 60, le contrôleur 20 configure le dispositif de génération de champ magnétique, en activant les paires de bobines électriques, pour générer champ magnétique orienté selon une direction sélectionnée, par exemple la direction Y. De plus, le contrôleur 20 adapte la configuration des moyens de polarisation 4 pour polariser le faisceau incident 11 suivant un état de polarisation linéaire orienté selon l'axe X. La durée de l'étape 60 d'orientation du champ magnétique et de sélection de l'état de polarisation est de l'ordre de 1 ms.

A l'étape 70, on laisse par exemple les atomes froids 19 tomber en chute libre, en interrompant le piégeage magnéto-optique. Les atomes tombent dans une direction qui dépend de l'accélération et/ou de la gravité à laquelle ils sont soumis et aussi de leur vitesse initiale $v_0$. La direction et l'amplitude de la chute libre par rapport au réseau de diffraction peut être évaluée au moyen d'accéléromètres classiques fixés au référentiel du réseau de diffraction et en utilisant les mesures d'accélération pour intégrer les équations du mouvement. A titre d'exemple, on considère ici des atomes froids 19 qui tombent suivant une direction située dans le plan XZ avec une vitesse initiale $v_0$ orientée à 45 degrés de l'axe Z. La durée de l'étape 70 de chute libre est de l'ordre de 10 ms. Pendant la chute libre des atomes, le calculateur calcule en temps réel la vitesse des atomes. Le calculateur combine la vitesse des atomes calculée avec le choix de l'axe de mesure pour calculer le désaccord en fréquence Raman (ou Bragg) appliqué à la source laser qui est adapté pour sélectionner une paire de faisceau laser en combinaison avec les paramètres d'orientation du champ magnétique et d'état de polarisation ajustés à l'étape 60 précédente. A cet effet, le système d'ajustement 3 du désaccord en fréquence optique entre deux raies de la source laser est adapté de manière à ajuster le désaccord en fréquence optique en fonction du calcul en temps réel de la vitesse des atomes. La combinaison des paramètres d'orientation du champ magnétique, d'état de polarisation déterminé du faisceau laser incident et des faisceaux diffractés et du désaccord en fréquence optique prédéterminé de la source laser permet de sélectionner une paire de faisceaux laser ($\boldsymbol{k}_A$, $\boldsymbol{k}_B$) qui

détermine un axe de mesure d'accélération suivant le vecteur $k_A$ - $k_B$. Cette paire de faisceaux active de manière efficace une transition Raman à deux photons déterminée en fonction du désaccord en fréquence relatif à la vitesse des atomes. La paire de faisceaux laser ($k_A$, $k_B$) sélectionnée aux étapes 60 et 70 est ainsi adaptée pour effectuer une mesure d'interférométrie atomique suivant l'axe choisi à l'étape 55.

En variante, on transmet aux atomes une vitesse initiale, par exemple par interaction avec un autre faisceau laser, avec un gradient de champ magnétique ou en utilisant un réseau optique pour accélérer les atomes (technique de mélasse mouvante). Selon une autre variante, on contrôle la vitesse des atomes en faisant varier rapidement les fréquences optiques de la source laser durant l'impulsion Raman pour simuler une vitesse artificielle.

L'étape 80 constitue l'étape d'interrogation par l'interférométrie atomique de type Mach-Zehnder sélectionné aux étapes 55, 60 et 70. De manière classique, cette étape 80 est elle-même constituée d'au moins trois étapes : une première étape de séparation du nuage d'atomes froids 19 en deux nuages d'atomes se propageant dans deux directions différentes, une deuxième étape de redirection des deux nuages d'atomes et une dernière étape de recombinaison des deux nuages d'atomes. La première étape est réalisée en appliquant ici une première impulsion résonnante pour une paire de faisceaux laser ($k_A$, $k_B$). La deuxième étape est réalisée en appliquant une deuxième impulsion constituée de la même paire de faisceaux laser ($k_A$, $k_B$). La dernière étape est réalisée en appliquant une dernière impulsion constituée de la même paire de faisceaux laser ($k_A$, $k_B$). La durée de l'étape 80 d'une mesure par interférométrie atomique de type Mach-Zehnder est de l'ordre de 20 ms.

L'étape 90 correspond à la détection d'un signal en sortie de l'interféromètre atomique généré à l'étape 80. A cet effet, le système de détection 8 détecte un signal représentatif de l'état quantique des atomes après recombinaison des deux nuages d'atomes en sortie de l'interféromètre atomique de Mach-Zehnder. Le calculateur 9 en déduit l'accélération des atomes suivant le premier axe choisi.

De façon avantageuse, à partir de la même source d'atomes et de la même source laser, le procédé comprend une deuxième séquence de mesure dans laquelle on réitère l'étape 55 pour sélectionner un deuxième axe de mesure d'interférométrie atomique (après avoir répété l'étape 50 de refroidissement et préparation de l'état quantique initial). Puis, lors d'une nouvelle étape 60, on change la direction du champ magnétique appliqué et l'état de polarisation du faisceau laser incident en fonction du deuxième axe de mesure choisi. Lors d'une nouvelle étape 70 on laisse les atomes en chute libre et on recalcule en temps réel un deuxième désaccord en fréquence de la source laser, adapté en fonction de la deuxième direction de mesure choisie, en combinaison avec l'orientation du champ magnétique et l'état de polarisation sélectionnés. Lors d'une nouvelle étape 80, on génère un deuxième interféromètre atomique de Mach-Zehnder sensible suivant le deuxième axe choisi. Enfin, une nouvelle étape 90 permet de mesurer un signal représentatif d'un deuxième état quantique des atomes. Le calculateur 9 en déduit l'accélération des atomes suivant le deuxième axe choisi.

De manière analogue, le procédé est répété pour obtenir une troisième mesure d'accélération suivant un troisième axe choisi en sélectionnant une troisième combinaison comprenant une troisième direction du champ magnétique, un troisième état de polarisation et un troisième désaccord en fréquence de la source laser relatif à la vitesse des atomes.

Un tel interféromètre atomique de Mach-Zehnder trouve des applications en particulier dans un gravimètre et/ou accéléromètre pour des mesures d'accélération. Les capteurs d'accélération ou de rotation embarqués forment des senseurs d'accélération/vitesse de rotation relative entre le référentiel par rapport auquel ils sont fixés et un référentiel inertiel/galiléen.

L'invention trouve des applications en navigation inertielle, accélérométrie, géologie, gravimétrie, gradiométrie, géodésie, sismologie ou de physique fondamentale.

Bien entendu, diverses autres modifications peuvent être apportées à l'invention dans le cadre des revendications annexées.

## Revendications

**1.** Interféromètre atomique (100) comprenant une source d'atomes (1) apte à générer un nuage d'atomes, une source laser (2) configurée pour générer un faisceau laser source (10), un dispositif de génération de champ magnétique (6, 61, 62, 63), l'interféromètre atomique (100) comportant des moyens de polarisation (4) configurés pour recevoir le faisceau laser source (10) et générer un faisceau laser incident (11) polarisé suivant un état de polarisation ajustable, un système d'ajustement (3) d'un désaccord entre deux fréquences optiques du faisceau laser incident, un réseau de diffraction bidimensionnel (5) disposé pour recevoir le faisceau laser incident (11) et former par diffraction au moins trois faisceaux diffractés (12, 13, 14, 15) suivant au moins trois directions non coplanaires, les au moins trois faisceaux diffractés étant inclinés par rapport à l'axe du faisceau laser incident, un contrôleur (20) configuré pour sélectionner une première combinaison d'un premier désaccord en fréquence optique du faisceau laser incident relatif à une première vitesse du nuage d'atomes, d'un premier état de polarisation du faisceau laser incident et d'un premier champ magnétique orienté suivant une direction déterminée par rapport au réseau de diffraction à deux dimensions, la première combinaison étant adaptée pour sélectionner une première paire de faisceaux laser parmi les paires de faisceaux formées à partir du faisceau laser incident et des au moins trois faisceaux diffractés, une différence entre les deux vecteurs d'onde de la première paire de faisceaux laser déterminant une première direction de mesure, la première paire de faisceaux laser étant appliquée pour interagir avec le nuage d'atomes suivant une séquence temporelle par transitions multi-photons et former un premier interféromètre atomique de Mach-Zehnder sensible à une accélération du nuage d'atomes suivant la première direction de mesure.

2. Interféromètre atomique (100) selon la revendication 1 dans lequel le contrôleur (20) est configuré pour sélectionner une deuxième combinaison d'un deuxième désaccord en fréquence optique du faisceau laser incident relatif à une deuxième vitesse du nuage d'atomes, d'un deuxième état de polarisation du faisceau laser incident et d'un deuxième champ magnétique par rapport au réseau de diffraction à deux dimensions, la deuxième combinaison étant adaptée pour sélectionner une deuxième paire de faisceaux laser parmi les paires de faisceaux formées à partir du faisceau laser incident et des au moins trois faisceaux diffractés, une différence entre les deux vecteurs d'onde de la deuxième paire de faisceaux laser déterminant une deuxième direction de mesure différente de la première direction de mesure, la deuxième paire de faisceaux laser étant appliquée pour interagir avec le nuage d'atomes suivant une séquence temporelle de transitions multi-photons et former un deuxième interféromètre atomique de Mach-Zehnder sensible à une accélération du nuage d'atomes suivant la deuxième direction de mesure.

3. Interféromètre atomique (100) selon l'une des revendications 1 ou 2 dans lequel le réseau de diffraction bidimensionnel (5) est un réseau de diffraction configuré pour générer par diffraction quatre faisceaux diffractés dans quatre directions non coplanaires.

4. Interféromètre atomique (100) selon l'une des revendications 1 ou 2 dans lequel le réseau de diffraction bidimensionnel (5) est un réseau de diffraction configuré pour générer par diffraction trois faisceaux diffractés dans trois directions non coplanaires.

5. Interféromètre atomique (100) selon l'une des revendications 1 à 4 dans lequel le réseau de diffraction bidimensionnel (5) est à conservation de polarisation.

6. Interféromètre atomique (100) selon l'une des revendications 1 à 5 dans lequel les moyens de polarisation (4) comprennent un retardateur à cristaux liquides, une cellule de Pockels ou un contrôleur de polarisation par déformation d'une fibre optique monomode.

7. Interféromètre atomique (100) selon l'une des revendications 1 à 6 dans lequel le dispositif de génération de champ magnétique comporte trois paires de bobines électriques (61, 62, 63) en configuration de Helmholtz.

8. Interféromètre atomique (100) selon l'une des revendications 1 à 7 comprenant des moyens de génération d'un gradient de champ magnétique (64, 65) adaptés pour ajuster la première vitesse et/ou la deuxième vitesse du nuage d'atomes.

9. Interféromètre atomique (100) selon l'une des revendications 1 à 8 dans lequel le système d'ajustement (3) d'un désaccord entre deux fréquences optiques du faisceau laser incident est adapté pour ajuster le premier désaccord en fréquence optique en fonction de la première vitesse du nuage d'atomes et/ou, respectivement, pour ajuster le deuxième désaccord en fréquence optique en fonction de la deuxième vitesse du nuage d'atomes.

10. Interféromètre atomique (100) selon l'une des revendications 1 à 9 dans lequel le système d'ajustement (3) d'un désaccord entre deux fréquences optiques du faisceau laser incident comprend un modulateur électro-optique et une source radiofréquence.

11. Interféromètre atomique (100) selon l'une des revendications 1 à 10 comprenant des moyens d'orientation du réseau de diffraction bidimensionnel.

12. Procédé d'interférométrie atomique comprenant les étapes suivantes :

a) génération d'un nuage d'atomes ;
b) sélection d'un premier état de polarisation d'un faisceau laser incident sur un réseau de diffraction bidimensionnel et d'un premier champ magnétique orienté suivant une direction déterminée par rapport au réseau de diffraction bidimensionnel ;

c) lancement (70) du nuage d'atomes avec une première vitesse et calcul d'un premier désaccord entre deux fréquences optiques du faisceau laser incident, le premier désaccord en fréquence optique étant relatif à la première vitesse, pour former une première combinaison du premier désaccord en fréquence optique du faisceau laser incident, du premier état de polarisation du faisceau laser incident et du premier champ magnétique, la première combinaison étant adaptée pour sélectionner une première paire de faisceaux parmi les paires de faisceaux formées à partir du faisceau laser incident et d'au moins trois faisceaux diffractés formés par diffraction du faisceau laser incident sur le réseau de diffraction bidimensionnel suivant au moins trois directions non coplanaires ;

d) application au nuage d'atomes de la première combinaison du premier champ magnétique, du premier état de polarisation et du premier désaccord entre deux fréquences optiques du faisceau laser incident de manière à sélectionner la première paire de faisceaux laser, une différence entre vecteurs d'onde de la première paire de faisceaux laser déterminant une première direction de mesure, la première paire de faisceaux laser étant appliquée pour interagir avec le nuage d'atomes suivant une séquence temporelle de transitions multi-photons et former un premier interféromètre atomique de Mach-Zehnder sensible à une accélération du nuage d'atomes suivant la première direction de mesure ;

e) détection (90) d'un signal représentatif d'une accélération du nuage d'atomes suivant la première direction de mesure.

13. Procédé d'interférométrie atomique selon la revendication 12 dans lequel on répète l'étape a) et comprenant en outre les étapes suivantes :

f) sélection d'un deuxième champ magnétique et d'un deuxième état de polarisation du faisceau laser incident sur le réseau de diffraction bidimensionnel ;

g) lancement (70) du nuage d'atomes avec une deuxième vitesse et calcul d'un deuxième désaccord entre deux fréquences optiques du faisceau laser incident, le deuxième désaccord en fréquence optique étant relatif à la deuxième vitesse, pour former une deuxième combinaison du deuxième désaccord en fréquence optique du faisceau laser incident, du deuxième état de polarisation du faisceau laser incident et du deuxième champ magnétique, la deuxième combinaison étant adaptée pour sélectionner une deuxième paire de faisceaux parmi les paires de faisceaux formées à partir du faisceau laser incident et des au moins trois faisceaux diffractés ;

h) application au nuage d'atomes de la deuxième combinaison du deuxième champ magnétique, du deuxième état de polarisation et du deuxième désaccord entre deux fréquences optiques du faisceau laser incident de manière à sélectionner la deuxième paire de faisceaux laser, une différence entre vecteurs d'onde de la deuxième paire de faisceaux laser déterminant une deuxième direction de mesure, la deuxième paire de faisceaux laser étant appliquée pour interagir avec le nuage d'atomes suivant une séquence temporelle de transitions multi-photons et former un deuxième interféromètre atomique de Mach-Zehnder sensible à une accélération du nuage d'atomes suivant la deuxième direction de mesure ;

i) détection (90) d'un signal représentatif d'une accélération du nuage d'atomes suivant la deuxième direction de mesure.

14. Procédé d'interférométrie atomique selon l'une des revendications 12 ou 13 comprenant une étape de piégeage et refroidissement du nuage d'atomes pour former un nuage d'atomes froids (19) et de préparation d'un état quantique initial du nuage d'atomes froids (19).

15. Procédé d'interférométrie atomique selon la revendication 14 dans lequel l'étape de piégeage et refroidissement comprend un piégeage magnéto-optique du nuage d'atomes par superposition du faisceau laser incident (11) et des au moins trois faisceaux diffractés (12, 13, 14, 15) dans une zone de recouvrement (16) et par application d'un champ magnétique quadripolaire adapté pour former le nuage d'atomes froids (19).

**Patentansprüche**

1. Atomares Interferometer (100) mit einer Atomquelle (1), die geeignet ist, eine Wolke von Atomen zu erzeugen, einer Laserquelle (2), die dazu ausgelegt ist, einen Laserquellenstrahl (10) zu erzeugen, einer Vorrichtung (6, 61, 62, 63) zum Erzeugen eines Magnetfelds, wobei das atomare Interferometer (100) folgendes aufweist: Polarisationsmittel (4), die dazu ausgelegt sind, den Laserquellenstrahl (10) zu empfangen und einen einfallenden Laserstrahl (11) zu erzeugen, der gemäß einem einstellbaren Polarisationszustand polarisiert ist, ein System (3) zum Einstellen eines Unterschieds zwischen zwei optischen Frequenzen des einfallenden Laserstrahls, ein zweidimensionales Beugungsgitter (5), das zum Empfangen des einfallenden Laserstrahls (11) und zum Bilden, durch Beugung, von mindestens drei gebeugten Strahlen (12, 13, 14, 15) in mindestens drei nicht koplanaren Richtungen angeordnet ist, wobei die mindestens drei gebeugten Strahlen gegenüber der Achse des einfallenden Strahls geneigt sind, eine Steuervorrichtung (20), die dazu ausgelegt ist, eine erste Kombination aus einem ersten Unterschied zwischen optischen Frequenzen des einfallenden Laserstrahls bezüglich einer ersten Geschwindigkeit der Wolke von Atomen, einem ersten Polarisationszustand des einfallenden Laserstrahls und einem ersten Magnetfeld, das in einer Richtung ausgerichtet ist, die in Bezug auf das zweidimensionale Beugungsgitter bestimmt ist, auszuwählen, wobei die erste Kombination zum Auswählen eines ersten Paars Laserstrahlen unter den aus dem einfallenden Laserstrahl und den mindestens drei gebeugten Strahlen gebildeten Laserstrahlpaaren geeignet ist, wobei eine Differenz zwischen den beiden Wellenvektoren des ersten Paars Laserstrahlen eine erste Meßrichtung bestimmt, wobei das erste Paar Laserstrahlen angewendet wird, um mit der Wolke von Atomen in einer zeitlichen Abfolge von Mehrphotonen-Übergängen zu reagieren und ein erstes atomares Interferometer nach Mach-Zehnder zu bilden, das auf eine Beschleunigung der Wolke von Atomen in der ersten Meßrichtung reagiert.

2. Atomares Interferometer (100) gemäß Anspruch 1, bei dem die Steuervorrichtung (20) dazu ausgelegt ist, eine zweite Kombination aus einem zweiten Unterschied zwischen optischen Frequenzen des einfallenden Laserstrahls bezüglich einer zweiten Geschwindigkeit der Wolke von Atomen, einem zweiten Polarisationszustand des einfallenden Laserstrahls und einem zweiten Magnetfeld in Bezug auf das zweidimensionale Beugungsgitter auszuwählen, wobei die zweite Kombination zum Auswählen eines zweiten Paars Laserstrahlen unter den aus dem einfallenden Laserstrahl und den mindestens drei gebeugten Strahlen gebildeten Laserstrahlpaaren geeignet ist, wobei eine Differenz zwischen den beiden Wellenvektoren des zweiten Paars Laserstrahlen eine von der ersten Meßrichtung verschiedene zweite Meßrichtung bestimmt, wobei das zweite Paar Laserstrahlen angewendet wird, um mit der Wolke von Atomen in einer zeitlichen Abfolge von Mehrphotonenübergängen zu reagieren und ein zweites atomares Interferometer nach Mach-Zehnder zu bilden, das auf eine Beschleunigung der Wolke von Atomen in der zweiten Meßrichtung reagiert.

3. Atomares Interferometer (100) gemäß einem der Ansprüche 1 oder 2, bei dem das zweidimensionale Beugungsgitter (5) ein Beugungsgitter ist, das dazu ausgelegt ist, durch Beugung vier gebeugte Strahlen in vier nicht koplanaren Richtungen zu erzeugen.

4. Atomares Interferometer (100) gemäß einem der Ansprüche 1 oder 2, bei dem das zweidimensionale Beugungsgitter (5) ein Beugungsgitter ist, das dazu ausgelegt ist, durch Beugung drei gebeugte Strahlen in drei nicht koplanaren Richtungen zu erzeugen.

5. Atomares Interferometer (100) gemäß einem der Ansprüche 1 bis 4, bei dem das zweidimensionale Beugungsgitter (5) polarisationserhaltend ist.

6. Atomares Interferometer (100) gemäß einem der Ansprüche 1 bis 5, bei dem die Polarisationsmittel (4) einen Flüssigkristallverzögerer, eine Pockelszelle oder eine Polarisationssteuerung durch Verformung einer optischen Monomodefaser aufweisen.

7. Atomares Interferometer (100) gemäß einem der Ansprüche 1 bis 6, bei dem die Vorrichtung zum Erzeugen eines Magnetfelds drei Paar elektrische Spulen (61, 62, 63) in Helmholtz-Anordnung aufweist.

8. Atomares Interferometer (100) gemäß einem der Ansprüche 1 bis 7, das Mittel (64, 65) zum Erzeugen eines Magnetfeldgradienten aufweist, die geeignet sind, die erste und/oder die zweite Geschwindigkeit der Wolke von Atomen einzustellen.

9. Atomares Interferometer (100) gemäß einem der Ansprüche 1 bis 8, bei dem das System (3) zum Einstellen eines Unterschieds zwischen zwei optischen Frequenzen des einfallenden Laserstrahls geeignet ist, den ersten Unterschied zwischen optischen Frequenzen in Abhängigkeit von der ersten Geschwindigkeit der Wolke von Atomen und/oder entsprechend den zweiten Unterschied zwischen optischen Frequenzen in Abhängigkeit von der zweiten Geschwindigkeit der Wolke von Atomen einzustellen.

10. Atomares Interferometer (100) gemäß einem der Ansprüche 1 bis 9, bei dem das System (3) zum Einstellen eines Unterschieds zwischen zwei optischen Frequenzen des einfallenden Laserstrahls einen elektrooptischen Modulator und eine Hochfrequenzquelle aufweist.

11. Atomares Interferometer (100) gemäß einem der Ansprüche 1 bis 10, das Mittel zum Ausrichten des zweidimensionalen Beugungsgitters aufweist.

12. Verfahren zur Atomarinterferometrie mit den folgenden Schritten:

a) Erzeugen einer Wolke von Atomen,

b) Auswählen eines ersten Polarisationszustands eines auf ein zweidimensionales Beugungsgitter einfallenden Laserstrahls und eines ersten Magnetfelds, das in einer in Bezug auf das zweidimensionale Beugungsgitter bestimmten Richtung ausgerichtet ist,

c) Ausstoßen (70) der Wolke von Atomen mit einer ersten Geschwindigkeit und Berechnen eines ersten Unterschieds zwischen zwei optischen Frequenzen des einfallenden Laserstrahls, wobei sich der erste Unterschied zwischen zwei optischen Frequenzen auf die erste Geschwindigkeit bezieht, um eine erste Kombination aus dem ersten Unterschied zwischen optischen Frequenzen des einfallenden Laserstrahls, dem ersten Polarisationszustand des einfallenden Laserstrahls und dem ersten Magnetfeld zu bilden, wobei die erste Kombination geeignet ist, ein erstes Paar Strahlen unter den aus dem einfallenden Laserstrahl und mindestens drei durch Beugung des einfallenden Laserstrahls auf dem zweidimensionalen Beugungsgitter in mindestens drei nicht koplanaren Richtungen gebeugten Strahlen gebildeten Paaren von Strahlen auszuwählen,

d) Anwenden der ersten Kombination aus dem ersten Magnetfeld, dem ersten Polarisationszustand und dem ersten Unterschied zwischen zwei optischen Frequenzen des einfallenden Laserstrahls auf die Wolke von Atomen, um das erste Paar Laserstrahlen auszuwählen, wobei ein Unterschied zwischen Wellenvektoren des ersten Paars Laserstrahlen eine erste Meßrichtung bestimmt, wobei das erste Paar Laserstrahlen angewendet wird, um mit der Wolke von Atomen in einer zeitlichen Abfolge von Mehrphotonenübergängen zu reagieren und ein erstes atomares Interferometer nach Mach-Zehnder zu bilden, das auf eine Beschleunigung der Wolke von Atomen in der ersten Meßrichtung reagiert,

e) Erfassen (90) eines Signals, das für eine Beschleunigung der Wolke von Atomen in der ersten Meßrichtung steht.

13. Verfahren zur Atomarinterferometrie gemäß Anspruch 12, bei dem der Schritt a) wiederholt wird und das außerdem die folgenden Schritte aufweist:

f) Auswählen eines zweiten Magnetfelds und eines zweiten Polarisationszustands des auf das zweidimensionale Beugungsgitter einfallenden Laserstrahls,

g) Ausstoßen (70) der Wolke von Atomen mit einer zweiten Geschwindigkeit und und Berechnen eines zweiten Unterschieds zwischen zwei optischen Frequenzen des einfallenden Laserstrahls, wobei sich der zweite Unterschied zwischen optischen Frequenzen auf die zweite Geschwindigkeit bezieht, um eine zweite Kombination aus dem zweiten Unterschied zwischen optischen Frequenzen des einfallenden Laserstrahls, dem zweiten Polarisationszustand des einfallenden Laserstrahls und dem zweiten Magnetfeld zu bilden, wobei die zweite Kombination geeignet ist, unter den aus dem einfallenden Laserstrahl und den mindestens drei gebeugten Strahlen gebildeten Paaren von Strahlen ein zweites Paar Strahlen auszuwählen,

h) Anwenden der zweiten Kombination aus dem zweiten Magnetfeld, dem zweiten Polarisationszustand und dem zweiten Unterschied zwischen zwei optischen Frequenzen des einfallenden Laserstrahls auf die Wolke von Atomen, um das zweite Paar Laserstrahlen auszuwählen, wobei ein Unterschied zwischen Wellenvektoren des zweiten Paars Laserstrahlen eine zweite Meßrichtung bestimmt, wobei das zweite Paar Laserstrahlen angewendet wird, um mit der Wolke von Atomen in einer zeitlichen Abfolge von Mehrphotonenübergängen zu reagieren und ein zweites atomares Interferometer nach Mach-Zehnder zu bilden, das auf eine Beschleunigung der Wolke von Atomen in der zweiten Meßrichtung reagiert,

i) Erfassen (90) eines Signals, das für eine Beschleunigung der Wolke von Atomen in der zweiten Meßrichtung steht.

14. Verfahren zur Atomarinterferometrie gemäß einem der Ansprüche 12 oder 13 mit einem Schritt des Einfangens und Abkühlens der Wolke von Atomen, um eine Wolke von kalten Atomen (19) zu bilden, und des Herstellens eines Quantenausgangszustands der Wolke von kalten Atomen (19).

15. Verfahren zur Atomarinterferometrie gemäß Anspruch 14, bei dem der Schritt des Einfangens und Abkühlens einen Schritt des optomagnetischen Einfangens der Wolke von Atomen durch Überlagerung des einfallenden Laserstrahls (11) und der mindestens drei gebeugten Strahlen (12, 13, 14, 15) in einer Überdeckungszone (16) und durch Anwendung eines quadripolaren Magnetfelds, das geeignet ist, die Wolke kalter Atome (19) zu bilden, aufweist.

**Claims**

1. An atomic interferometer (100) comprising a source of atoms (1) adapted to generate a cloud of atoms, a laser source (2) configured to generate a source laser beam (10), a magnetic field generating device (6, 61, 62, 63), the atomic interferometer (100) including polarization means (4) configured to receive the source laser beam (10) and to generate an incident laser beam (11) polarized according to an adjustable polarization state, a system (3) for adjusting a detuning between two optical frequencies of the incident laser beam, a two-dimensional diffraction grating (5) arranged is such a way as to receive the incident laser beam (11) and to form by diffraction at least three beams (12, 13, 14, 15) diffracted along at least three non-coplanar directions, the at least three diffracted beams being inclined with respect to the axis of the incident laser beam, a controller (20) configured to select a first combination of a first optical frequency detuning of the incident laser beam related to a first speed of the cloud of atoms, a first polarization state of the incident laser beam and a first magnetic field oriented along a determined direction with respect to the two-dimensional diffraction grating, the first combination being adapted to select a first pair of laser beams among the pairs of beams formed from the incident laser beam and the at least three diffracted beams, a difference between the two wavevectors of the first pair of laser beams determining a first measurement direction, the first pair of laser beams being applied in such a way as to interact with the cloud of atoms according to a time sequence by multi-photon transitions and to form a first Mach-Zehnder atomic interferometer sensitive to an acceleration of the cloud of atoms along the first measurement direction.

2. The atomic interferometer (100) according to claim 1, wherein the controller (20) is configured to select a second combination of a second optical frequency detuning of the incident laser beam related to a second speed of the cloud of atoms, a second polarization state of the incident laser beam and a second magnetic field with respect to the two-dimensional diffraction grating, the second combination being adapted to select a second pair of laser beams among the pairs of beams formed from the incident laser beam and the at least three diffracted beams, a difference between the two wavevectors of the second pair of laser beams determining a second measurement direction different from the first measurement direction, the second pair of laser beams being applied in such a way as to interact with the cloud of atoms according to a time sequence by multi-photon transitions and to form a second Mach-Zehnder atomic interferometer sensitive to an acceleration of the cloud of atoms along the second measurement direction.

3. The atomic interferometer (100) according to any one of claims 1 or 2, wherein the two-dimensional diffraction grating (5) is a diffraction grating configured to generate by diffraction four diffracted beams in four non-coplanar directions.

4. The atomic interferometer (100) according to any one of claims 1 or 2, wherein the two-dimensional diffraction grating (5) is a diffraction grating configured to generate by diffraction three diffracted beams in three non-coplanar directions.

5. The atomic interferometer (100) according to any one of claims 1 to 4, wherein the two-dimensional diffraction grating (5) is of the polarization-maintaining type.

6. The atomic interferometer (100) according to any one of claims 1 to 5, wherein the polarization means (4) comprise a liquid crystal retarder, a Pockels cell or a polarization controller based on the deformation of a single-mode optical fibre.

7. The atomic interferometer (100) according to any one of claims 1 to 6, wherein the magnetic field generating device includes three pairs of electric coils (61, 62, 63) in Helmholtz configuration.

8. The atomic interferometer (100) according to any one of claims 1 to 7, comprising magnetic field gradient generating means (64, 65) adapted to adjust the first speed and/or the second speed of the cloud of atoms.

9. The atomic interferometer (100) according to any one of claims 1 to 8, wherein the system (3) for adjusting a detuning between two optical frequencies of the incident laser beam is adapted to adjust the first optical frequency detuning as a function of the first speed of the cloud of atoms and/or, respectively, to adjust the second optical frequency detuning as a function of the second speed of the cloud of atoms.

10. The atomic interferometer (100) according to any one of claims 1 to 9, wherein the system (3) for adjusting a detuning between two optical frequencies of the incident laser beam comprises an electro-optic modulator and a radiofrequency source.

**11.** The atomic interferometer (100) according to any one of claims 1 to 10, comprising means for orienting the two-dimensional diffraction grating.

**12.** An atomic interferometry method comprising the following steps:

a) generating a cloud of atoms;

b) selecting a first polarization state of a laser beam incident on a two-dimensional diffraction grating and a first magnetic field oriented along a determined direction with respect to the two-dimensional diffraction grating;

c) launching (70) the cloud of atoms with a first speed and calculating a first detuning between two optical frequencies of the incident laser beam, the first optical frequency detuning being related to the first speed, to form a first combination of the first optical frequency detuning of the incident laser beam, the first polarization state of the incident laser beam and the first magnetic field, the first combination being adapted to select a first pair of beams among the pairs of beams formed from the incident laser beam and at least three diffracted beams formed by diffraction of the incident laser beam on the two-dimensional diffraction grating along at least three non-coplanar directions ;

d) applying to the cloud of atoms the first combination of the first magnetic field, the first polarization state and the first detuning between two optical frequencies of the incident laser beam, in such a way as to select the first pair of laser beams, a difference between wavevectors of the first pair of laser beams determining a first measurement direction, the first pair of laser beams being applied in such a way as to interact with the cloud of atoms according to a time sequence of multi-photon transitions and to form a first Mach-Zehnder atomic interferometer sensitive to an acceleration of the cloud of atoms along the first measurement direction;

e) detecting (90) a signal representative of an acceleration of the cloud of atoms along the first measurement direction.

**13.** The atomic interferometry method according to claim 12, wherein step a) is repeated, and further comprising the following steps:

f) selecting a second magnetic field and a second polarization state of the laser beam incident on the two-dimensional diffraction grating;

g) launching (70) the cloud of atoms with a second speed and calculating a second detuning between two optical frequencies of the incident laser beam, the second optical frequency detuning being related to the second speed, to form a second combination of the second optical frequency detuning of the incident laser beam, the second polarization state of the incident laser beam and the second magnetic field, the second combination being adapted to select a second pair of beams among the pairs of beams formed from the incident laser beam and the at least three diffracted beams;

h) applying to the cloud of atoms the second combination of the second magnetic field, the second polarization state and the second detuning between two optical frequencies of the incident laser beam, in such a way as to select the second pair of laser beams, a difference between wavevectors of the second pair of laser beams determining a second measurement direction, the second pair of laser beams being applied in such a way as to interact with the cloud of atoms according to a time sequence of multi-photon transitions and to form a second Mach-Zehnder atomic interferometer sensitive to an acceleration of the cloud of atoms along the second measurement direction;

i) detecting (90) a signal representative of an acceleration of the cloud of atoms along the second measurement direction.

**14.** The atomic interferometry method according to any one of claims 12 or 13, comprising a step of trapping and cooling the cloud of atoms to form a cloud of cold atoms (19) and preparing an initial quantum state of the cloud of cold atoms (19).

**15.** The atomic interferometry method according to claim 14, wherein the trapping and cooling step comprises a magneto-optic trapping of the cloud of atoms by superposition of the incident laser beam (11) and the at least three diffracted beams (12, 13, 14, 15) in an overlapping area (16) and by application of a quadripolar magnetic field adapted to form the cloud of cold atoms (19).

EP 3 893 003 B1

# Fig.1

20

**Fig.2**

**Fig.3**

**Fig.4**

**Fig.5**

$K_Z - K_{-X}$

$K_Z$

$K_Z - K_{+X}$

$K_{+X}$

$K_{-X}$

$K_{+X} - K_{-X}$

# Fig.6

# Fig.7

## RÉFÉRENCES CITÉES DANS LA DESCRIPTION

**Documents brevets cités dans la description**

- FR 2928725, P. Bouyer et A. Landragin

**Littérature non-brevet citée dans la description**

- **C. C. NSHII et al.** A surface-patterned chip as a strong source of ultracold atoms for quantum technologies. *Nature Nanotechnology,* 2013, vol. 8, 321-324